# EUROPEAN PATENT APPLICATION

(11) **EP 2 549 662 A2**
(43) Date of publication of application: **23.01.2013**
(21) Application number: 12176797.4
(22) Date of filing: 18.07.2012
(51) Int. Cl.: H04B 7/02

(54) **Method of performing retransmissions via different transmission points and related communication device**

(30) Priority: 19.07.2011 US 201161509481 P; 19.07.2011 US 201161509472 P; 05.06.2012 US 201213488453
(71) Applicant: Industrial Technology Research Institute, Chutung, Hsinchu 310 (TW)
(72) Inventor: Ho, Chung-Lien, 300 Hsinchu City (TW); Yang, Hua-Lung, 110 Taipei City (TW); Yen, Chia-Pang, 111 Taipei City (TW)
(74) Representative: Becker Kurig Straus

(57) **Abstract**

A method of performing a retransmission of a packet from a plurality of transmission points in a wireless communication system to a mobile device of the wireless communication system is disclosed. The method comprises transmitting the packet from a first transmission point of the plurality of transmission points to the mobile device in a first transmission; and transmitting the packet from a second transmission point of the plurality of transmission points to the mobile device in a second transmission, after transmitting the packet from the first transmission point in the first transmission, wherein the first transmission point and the second transmission point are different transmission points.

## Description

### Field of the Invention

The present invention relates to a method of performing retransmissions via different transmission points in a wireless communication system and related communication device.

### Background of the Invention

A long-term evolution (LTE) system supporting the 3GPP Rel-8 standard and/or the 3GPP Rel-9 standard are developed by the 3rd Generation Partnership Project (3GPP) as a successor of a universal mobile telecommunications system (UMTS), for further enhancing performance of the UMTS to satisfy increasing needs of users. The LTE system includes a new radio interface and a new radio network architecture that provides a high data rate, low latency, packet optimization, and improved system capacity and coverage. In the LTE system, a radio access network known as an evolved universal terrestrial radio access network (E-UTRAN) includes multiple evolved Node-Bs (eNBs) for communicating with multiple user equipments (UE)s, and communicating with a core network including a mobility management entity (MME), a serving gateway, etc., for Non-Access Stratum (NAS) control.

A LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint transmission/reception (CoMP), uplink (UL) multiple-input multiple-output (MIMO), etc. For a UE and an eNB to communicate with each other in the LTE-A system, the UE and the eNB must support standards developed for the LTE-A system, such as the 3GPP Rel-10 standard or later versions.

A hybrid automatic repeat request (HARQ) process is used in a communication system (e.g., the LTE system and the LTE-A system) to provide both efficient and reliable communications. Different from an automatic repeat request (ARQ) process, a forward error correcting code (FEC) and soft combining are used for the HARQ process. In detail, before a transmitter (e.g., eNB) transmits a packet (e.g., a data stream, a frame or a transport block) including multiple coded bits to a receiver (e.g., UE), the transmitter divides the packet into multiple blocks, i.e., multiple redundancy versions. The transmitter only transmits one of the redundancy versions in each transmission or retransmission. According to whether the same redundancy version is transmitted in the retransmission, the soft combining used for the HARQ can be classified into two categories: chase combining (CC) and incremental redundancy (IR). When the same redundancy version of the packet is transmitted in each retransmission, the HARQ is a CC-based HARQ. When a different redundancy version of the packet is transmitted in each retransmission, the HARQ is an IR-based HARQ.

For example, after the transmitter transmits a redundancy version of the packet to the receiver in the first transmission, the receiver feeds back an acknowledgment (ACK) if the receiver can recover the packet by decoding the redundancy version. Oppositely, the receiver feeds back a negative acknowledgment (NACK) to the transmitter, if the receiver cannot recover the packet by decoding the redundancy version. In this situation, the receiver stores the redundancy reversion of the packet in a soft buffer of the receiver, and waits for the transmitter to retransmit a redundancy version of the packet in the second transmission (i.e., the first retransmission). The redundancy versions in the first transmission and the second transmission are the same if the HARQ is the CC-based HARQ, and are different if the HARQ is the IR-based HARQ. After the receiver receives the redundancy version in the second transmission, the receiver decodes the redundancy versions (either the same or different) jointly, to recover the packet. Thus, the packet can be recovered with a high probability. The receiver continues the HARQ process (i.e., accumulates redundancy versions of the packet) until the packet is recovered or a maximum number of retransmissions is reached. Since the packet with few errors can be recovered by using the FEC without feeding back the NACK, i.e., requesting a retransmission, and the packet with more errors can be recovered by decoding the redundancy versions jointly, throughput of the communication system is increased due to fewer retransmissions.

When the CoMP is configured to a UE and multiple transmission points (e.g., an eNB, a relay node or a remote antenna of an eNB), the UE may communicate with the transmission points simultaneously, i.e., access a service via all or part of the transmission points. For example, a transmission point can be an eNB, a relay node or a remote antenna of an eNB (e.g., remote radio head (RRH)). More specifically, an eNB may manage only one transmission point, or may manage multiple transmission points. That is, Cell identities (IDs) of different transmission points may be different (e.g., when being managed by different eNBs), or may be the same (e.g., when being managed by the same eNB). Thus, signals transmitted between the UE and the transmission points can be easily recovered due to better quality of the signals.

In detail, when the transmission points are involved in the CoMP, one of the transmission points is a serving point (i.e., serving cell). In general, link quality between the serving point and the UE is better than link qualities between other transmission points and the UE. Further, the CoMP can be classified into two main categories: Joint Processing (JP) and Coordinated Scheduling/Beamforming (CS/CB). A main difference between the JP and the CS/CB is that data of the UE is available at all the transmission points when the JP is configured (i.e. enabled), while the data of the UE is only available at the serving point when the CS/CB is configured. The JP can be further classified into two categories: joint transmission and dynamic point selection. When the joint transmission is configured, the data of the UE can be transmitted from multiple transmission points (e.g., coherently or noncoherently) to the UE to improve signal quality and/or cancel interferences. When the dynamic point selection is configured, the data of the UE is transmitted from only one of the transmission points (e.g., according to a choice or suggestion of the UE) to the UE to improve the signal quality and/or avoid the interferences. On the other hand, when the CS/CB is configured, the data of the UE is only transmitted from the serving point to the UE, while other transmission points may adjust scheduling (e.g., stop their transmissions), or adjust beamforming (e.g., move their beams) to mitigate the interferences.

However, according to the prior art, when the HARQ process is operated with the CoMP, a packet for a UE can only be transmitted from the same transmission point to the UE. That is, after the packet is transmitted from a transmission point to the UE, retransmissions of the packet can only be performed by the same transmission point. If link quality between the UE and the transmission point is bad, a large number of retransmissions are required for recovering the packet. Thus, diversity supported by the CoMP is not realized due to the rule of performing the retransmissions of the packet from the same transmission point. As a result, throughput of the UE can not be maximized when operating the CoMP. Therefore, maximizing the throughput of the UE when the HARQ process is operated with the CoMP is a topic to be discussed.

### Summary of the Invention

This in mind, the application aims at providing a method and a plurality of transmission points of a wireless communication system for performing retransmissions via different transmission points to solve the abovementioned problem.

This is achieved by a method and a plurality of transmission points handling a soft buffer for carrier aggregation according to claims 1 and 14. The dependent claims pertain to corresponding further developments and improvements.

As will be seen more clearly from the detailed description following below, the claimed method of performing a retransmission of a packet from a plurality of transmission points in a wireless communication system to a mobile device of the wireless communication system is disclosed. The method comprises transmitting the packet from a first transmission point of the plurality of transmission points to the mobile device in a first transmission; and transmitting the packet from a second transmission point of the plurality of transmission points to the mobile device in a second transmission, after transmitting the packet from the first transmission point in the first transmission, wherein the first transmission point and the second transmission point are different transmission points.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a schematic diagram of retransmissions of packets via different transmission points according to the present invention.
Fig. 5 is a schematic diagram of retransmissions of packets via different transmission points according to the present invention.
Fig. 6 is a schematic diagram of retransmissions of packets via different transmission points according to the present invention.
Fig. 7 is a schematic diagram of retransmissions of packets via different transmission points with multiple layers according to the present invention.
Fig. 8 is a schematic diagram of retransmissions of packets via multiple layers of different transmission points according to the present invention.
Fig. 9 is a schematic diagram of retransmissions of packets via multiple layers of different transmission points according to the present invention.

### Detailed Description

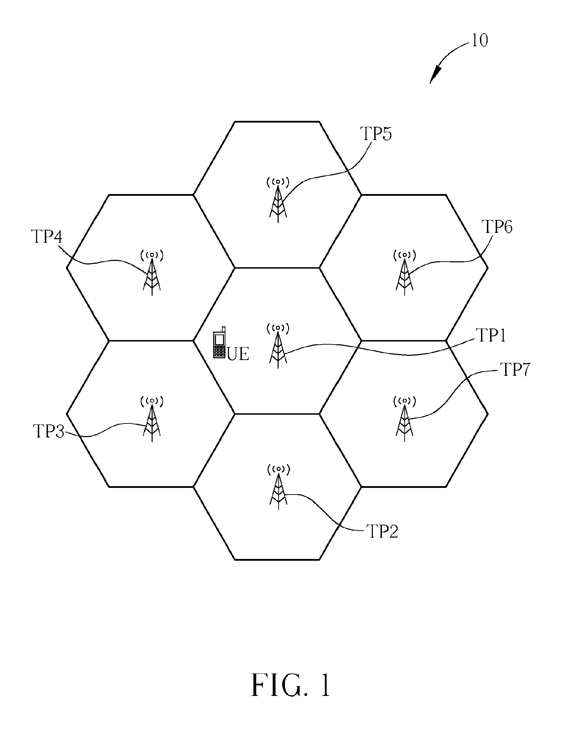

Please refer to Fig. 1, which is a schematic diagram of a wireless communication system 10 according to an example of the present invention. The wireless communication system 10 is briefly composed of a UE and 7 transmission points TP1-TP7, wherein each of the transmission points TP1-TP7 can perform data transmissions and receptions with the UE. The wireless communication system 10 may be a wideband code division multiple access (WCDMA) system such as a universal mobile telecommunications system (UMTS). Alternatively, the wireless communication system 10 may be an orthogonal frequency division multiplexing (OFDM) system and/or an orthogonal frequency division multiple access (OFDMA) system, such as a long term evolution (LTE) system, a LTE-Advanced (LTE-A) system or a successor of the LTE-A system. Besides, the UE and the transmission points TP1-TP7 can operate a hybrid automatic repeat request (HARQ) process, for improving throughput of the UE, wherein soft combining used for the HARQ process can be chase combining (CC) or incremental redundancy (IR).

Please note that, the UE and the transmission points TP1-TP7 are simply utilized for illustrating a structure of the wireless communication system 10. Practically, the transmission points TP1-TP7 can be referred as NodeBs (NBs) in a universal terrestrial radio access network (UTRAN) of the UMTS, or evolved NodeBs (eNBs), relay nodes and/or remote radio heads (RRHs) in an evolved UTRAN (E-UTRAN) of the LTE system or the LTE-A system, and are not limited herein. The UE can be mobile devices such as mobile phones, laptops, tablet computers, electronic books, and portable computer systems. Besides, a transmission point and the UE can be seen as a transmitter or a receiver according to transmission direction, e.g., for an uplink (UL), the UE is the transmitter and the transmission point is the receiver, and for a downlink (DL), the transmission point is the transmitter and the UE is the receiver.

Besides, the wireless communication system 10 can be seen as a multi-point cooperative network composed of multiple transmission points. That is, the UE may transmit a signal (e.g., a packet) to a first set of the transmission points TP1-TP7, and the UE may receive the signal transmitted by a second set of the transmission points TP1-TP7, wherein the first set and the second set may be the same or different. As a result, signal quality of the signal is improved. For example, when the wireless communication system 10 is referred to the LTE-A system, it means that the wireless communication system 10 supports coordinated multi-point transmission/reception (CoMP). The CoMP can be configured as Joint Processing (JP) (e.g. joint transmission or dynamic point selection) or Coordinated Scheduling/Beamforming (CS/CB), and is not limited. Further, without loss of generality, the transmission point TP1 can be seen as a serving point (i.e., serving cell) for the UE, wherein link quality between the transmission point TP1 and the UE is better than link qualities between other transmission points and the UE.

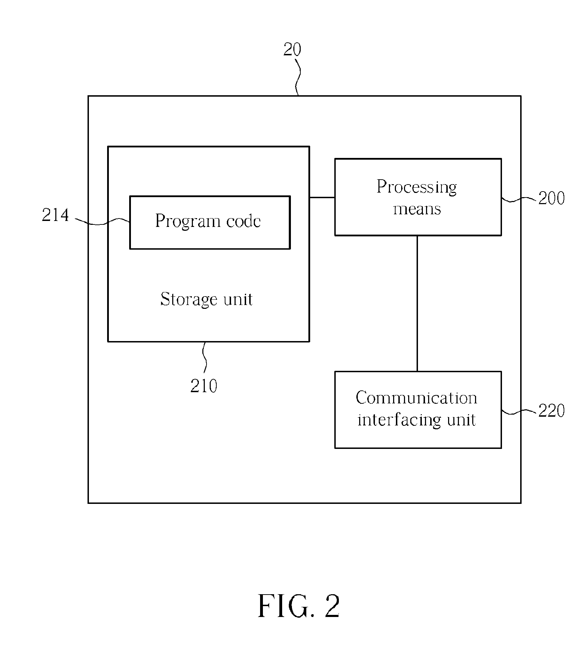

Please refer to Fig. 2, which is a schematic diagram of a communication device 20 according to an example of the present invention. The communication device 20 can be the UE or a transmission point shown in Fig. 1, but is not limited herein. The communication device 20 may include a processing means 200 such as a microprocessor or an Application Specific Integrated Circuit (ASIC), a storage unit 210 and a communication interfacing unit 220. The storage unit 210 may be any data storage device that can store a program code 214, accessed by the processing means 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a radio transceiver, and can transmit and receive wireless signals according to processing results of the processing means 200.

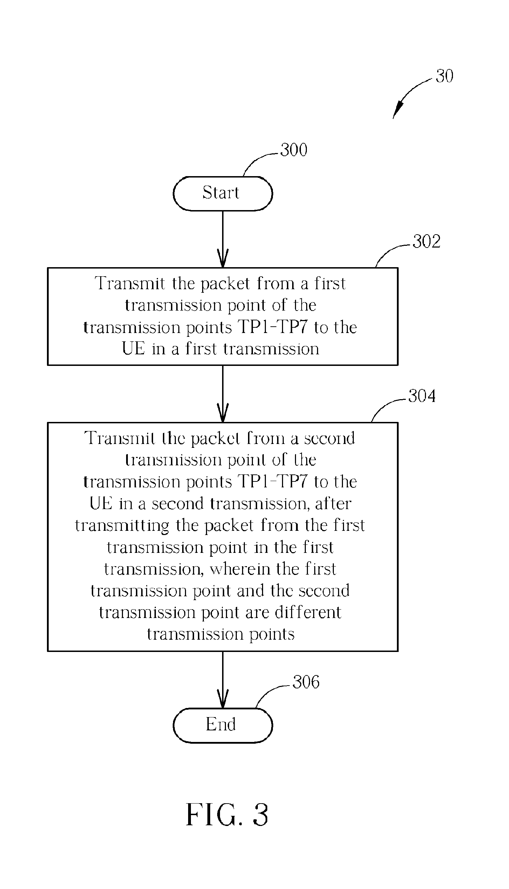

Please refer to Fig. 3, which is a flowchart of a process 30 according to an example of the present invention. The process 30 is utilized in the transmission points TP1-TP7 in Fig. 1, for performing a retransmission of a packet from part or all of the transmission points TP1-TP7 to the UE. The process 30 may be compiled into the program code 214 and includes the following steps:
Step 300: Start.
Step 302: Transmit the packet from a first transmission point of the transmission points TP1-TP7 to the UE in a first transmission.
Step 304: Transmit the packet from a second transmission point of the transmission points TP1-TP7 to the UE in a second transmission, after transmitting the packet from the first transmission point in the first transmission, wherein the first transmission point and the second transmission point are different transmission points.
Step 306: End.

According to the process 30, after a first transmission point of the transmission points TP1-TP7 transmits the packet to the UE in a first transmission, the UE is unable to recover (e.g., decode) the packet successfully and requests the retransmission of the packet. Then, in a second transmission (i.e., a first retransmission), a second transmission point of the transmission points TP1-TP7 which is different from the first transmission point transmits the packet to the UE. Since link qualities between the UE and the first transmission point and between the UE and the second transmission point are usually uncorrelated (e.g., different), it is unlikely that both of the link qualities are poor at the same time, and the packet is severely damaged in both of the transmissions. Thus, after the UE receives and combines the packets in the two transmissions, it is highly possible that the UE can recover the packet successfully. Even if the UE is still unable to recover the packet after the second transmission, the UE can continue the process 30, i.e., the packet is retransmitted from a third transmission point of the transmission points TP1-TP7 to the UE in a third transmission, wherein the third transmission point is different from the second transmission point, until the packet is recovered or a maximum number of retransmissions is reached. Therefore, diversity provided by the transmission points TP1-TP7 can be realized such that the packet can be recovered in fewer retransmissions. As a result, throughput of the UE can be improved.

Please note that, a goal of the present invention is that a retransmission of a packet is performed via different transmission points to realize (i.e., obtain) diversity provided by the transmission points, such that throughput of the UE can be improved. Realization of the process 30 is not limited.

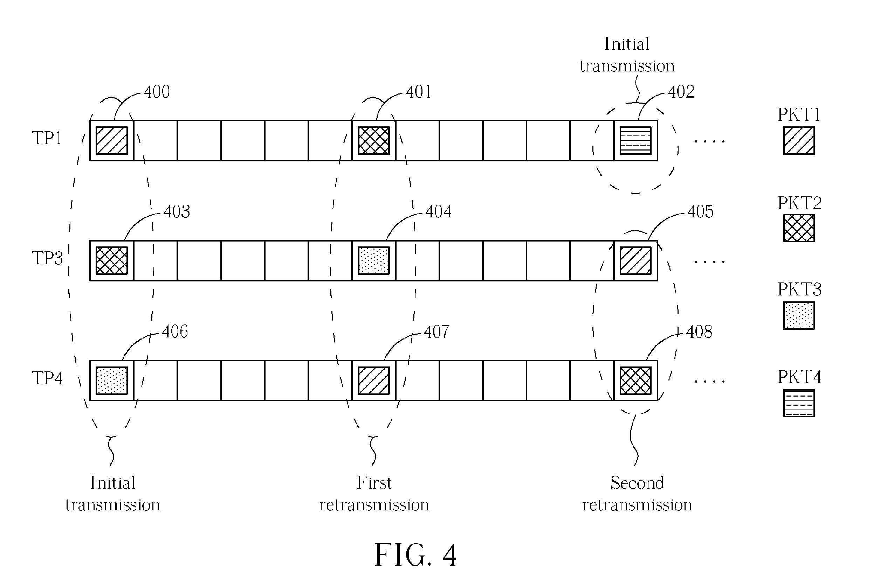

For example, please refer to Fig. 4, which is a schematic diagram of retransmissions of packets via different transmission points according to the present invention. In Fig. 4, resource groups allocated to a UE for performing initial transmissions or retransmissions of packets are represented by painted squares, and resource groups that are not used or allocated to other UEs are represented by blank squares. In detail, the UE prepares to receive packets PKT1-PKT4 from the transmission points TP1, TP3 and TP4 by using resource groups 400-408. Preferably, a one-to-one correspondence is assumed for the resource groups according to frequency indices (i.e., subcarrier indices) of the resource groups. For example, the frequency indices of the resource groups 400, 403 and 406 are the same, the frequency indices of the resource groups 401, 404 and 407 are the same, and the frequency indices of the resource groups 402, 405 and 408 are the same. Since the chase combining is assumed for the HARQ in Fig. 4, there is only one redundancy version for each of the packets PKT1-PKT4. That is, when a retransmission is required for recovering a packet, the same packet is transmitted in each of the retransmissions. Transmission of the packet PKT1 is first described as follows. After the transmission point TP1 transmits the packet PKT1 to the UE in an initial transmission by using the resource group 400, the UE is unable to recover the packet PKT1. The UE requests a first retransmission of the packet PKT1, e.g., by feeding back a negative acknowledgment (NACK) corresponding to the packet PKT1. Then, the transmission point TP4 retransmits the packet PKT1 in the first retransmission by using the resource group 407. That is, the first retransmission is performed via a transmission point different from the transmission point performing the initial transmission. If the UE is still unable to recover the packet PKT1 after the first retransmission, the transmission point TP3 can retransmit the packet PKT1 in a second retransmission by using the resource group 405. The above description is operated until the UE can recover the packet PKT1 (e.g., after the second retransmission) or a maximum number of retransmissions is reached.

Similarly, the packet PKT2 is transmitted from the transmission point TP3 (by using the resource group 403), the transmission point TP1 (by using the resource group 401) and the transmission point TP4 (by using the resource group 408) to the UE in the initial transmission, the first retransmission and the second retransmission, respectively, since the UE is unable to recover the packet PKT2 before the second retransmission. On the other hand, the packet PKT3 is only transmitted from the transmission point TP4 (by using the resource group 406) and the transmission point TP3 (by using the resource group 404) to the UE in the initial transmission and the first retransmission, respectively, since the UE can recover the packet PKT3 after the first retransmission. Thus, the transmission point TP1 can transmit the packet PKT4 by using the resource group 402.

Therefore, according to the above illustration, transmissions (e.g., retransmissions) of a packet are performed via different transmission points, respectively. Diversity can be realized for the retransmissions such that the packet can be recovered in fewer retransmissions. As a result, throughput of the UE is improved. Besides, since multiple packets are transmitted to the UE in each of the transmissions, the throughput of the UE is further improved.

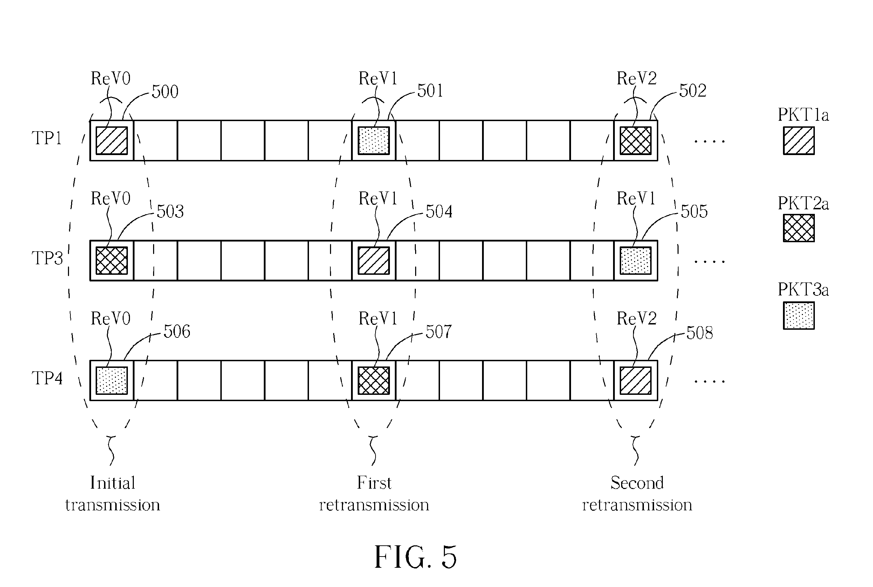

On the other hand, the present invention can also be applied to the HARQ with the incremental redundancy, i.e., different redundancy versions of a packet are retransmitted for recovering the packet. For example, please refer to Fig. 5, which is a schematic diagram of retransmissions of packets via different transmission points according to the present invention. In Fig. 5, resource groups allocated to a UE for performing initial transmissions or retransmissions of packets are represented by painted squares, and resource groups that are not used or allocated to other UEs are represented by blank squares.

In detail, the UE prepares to receive packets PKT1 a-PKT3a from the transmission points TP1, TP3 and TP4 by using resource groups 500-508. Preferably, a one-to-one correspondence is assumed for the resource groups according to frequency indices (i.e., subcarrier indices) of the resource groups. For example, the frequency indices of the resource groups 500, 503 and 506 are the same, the frequency indices of the resource groups 501, 504 and 507 are the same, and the frequency indices of the resource groups 502, 505 and 508 are the same. Since the incremental redundancy is assumed for the HARQ in Fig. 5, there are multiple redundancy versions for each of the packets PKT1a-PKT3a. That is, when a retransmission is required for recovering a packet, a different redundancy version of the packet may be transmitted in the retransmission. A number of the redundancy versions of each of the packets PKT1 a-PKT3a may not be the same. For example, the numbers of the redundancy versions of the packets PKT1 a-PKT3a are 3, 3 and 2, respectively, as shown in Fig. 5. The redundancy versions are labeled as ReV0-ReV2 according to the number of the redundancy versions. Transmission of the packet PKT1 a is first described as follows. After the transmission point TP1 transmits the redundancy version ReV0 of the packet PKT1 a to the UE in an initial transmission by using the resource group 500, the UE is unable to recover the packet PKT1a. The UE requests a first retransmission of the packet PKT1 a, e.g., by feeding back a NACK corresponding to the packet PKT1a. Then, the transmission point TP3 retransmits the redundancy version ReV1 of the packet PKT1 a in the first retransmission by using the resource group 504. That is, the first retransmission is performed via a transmission point different from the transmission point performing the initial transmission. If the UE is still unable to recover the packet PKT1 a after the first retransmission, the transmission point TP4 can retransmit the redundancy version ReV2 of the packet PKT1 a in a second retransmission by using the resource group 508. The above description is operated until the UE can recover the packet PKT1 a (e.g., after the second retransmission) or a maximum number of retransmissions is reached.

Similarly, the redundancy versions ReV0-ReV2 of the packet PKT2a are transmitted from the transmission point TP3 (by using the resource group 503), the transmission point TP4 (by using the resource group 507) and the transmission point TP1 (by using the resource group 502) to the UE in the initial transmission, the first retransmission and the second retransmission, respectively, since the UE is unable to recover the packet PKT2a before the second retransmission. Besides, the redundancy versions ReV0-Rev1 of the packet PKT3a are transmitted from the transmission point TP4 (by using the resource group 506) and the transmission point TP1 (by using the resource group 501) to the UE in the initial transmission and the first retransmission, respectively. Then, the redundancy version ReV1 of the packet PKT3a is transmitted again from the transmission point TP3 (by using the resource group 505) to the UE in the second retransmission, since the UE is unable to recover the packet PKT3a before the second retransmission. In other words, the redundancy versions of the packets are not required to be the same in the same retransmission, and the redundancy version of the packet is not required to be different in successive transmissions.

Therefore, according to the above illustration, transmissions (e.g., retransmissions) of redundancy versions of a packet are performed via different transmission points, respectively. Diversity can be realized for the retransmissions such that the packet can be recovered in fewer retransmissions. As a result, throughput of the UE is improved. Besides, since multiple packets are transmitted to the UE in each of the transmissions, the throughput of the UE is further improved.

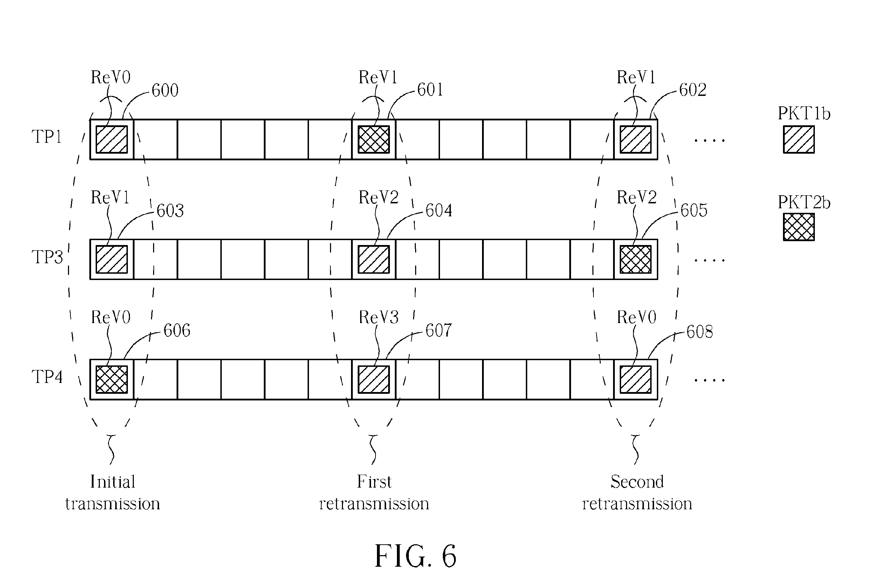

On the other hand, different redundancy versions of a packet can be transmitted from different transmission points to the UE in the same transmission (e.g., retransmission), respectively, for recovering the packet. For example, please refer to Fig. 6, which is a schematic diagram of retransmissions of packets via different transmission points according to the present invention. In Fig. 6, resource groups allocated to a UE for performing initial transmissions or retransmissions of packets are represented by painted squares, and resource groups that are not used or allocated to other UEs are represented by blank squares.

In detail, the UE prepares to receive packets PKT1 b-PKT2b from the transmission points TP1, TP3 and TP4 by using resource groups 600-608. Preferably, a one-to-one correspondence is assumed for the resource groups according to frequency indices (i.e., subcarrier indices) of the resource groups. For example, the frequency indices of the resource groups 600, 603 and 606 are the same, the frequency indices of the resource groups 601, 604 and 607 are the same, and the frequency indices of the resource groups 602, 605 and 608 are the same. Since the incremental redundancy is assumed for the HARQ in Fig. 6, there are multiple redundancy versions for each of the packets PKT1b-PKT2b. That is, when a retransmission is required for recovering a packet, a different redundancy version of the packet may be transmitted in the retransmission. A number of the redundancy versions of each of the packets PKT1 b-PKT2b may not be the same. For example, the numbers of the redundancy versions of the packets PKT1 b-PKT2b are 4 and 3, respectively, as shown in Fig. 6. The redundancy versions are labeled as ReV0-ReV3 according to the number of the redundancy versions. Transmission of the packet PKT1 b is first described as follows. After the redundancy versions ReV0 and ReV1 of the packet PKT1 b are transmitted from the transmission point TP1 (by using the resource group 600) and the transmission point TP3 (by using the resource group 603) to the UE in an initial transmission, respectively, the UE is unable to recover the packet PKT1 b. The UE requests a first retransmission of the packet PKT1 b, e.g., by feeding back a NACK corresponding to the packet PKT1 b. Then, the redundancy versions ReV2 and ReV3 of the packet PKT1 b are transmitted from the transmission point TP3 (by using the resource group 604) and the transmission point TP4 (by using the resource group 607) to the UE in the first retransmission. That is, the first retransmission is performed via a set of transmission points different (i.e., partly different, but can be complete different) from the set of transmission points performing the initial transmission. If the UE is still unable to recover the packet PKT1 b after the first retransmission, the redundancy versions ReV0 and ReV1 of the packet PKT1 b are transmitted from the transmission point TP4 (by using the resource group 608) and the transmission point TP1 (by using the resource group 602) to the UE in a second retransmission. The above description is operated until the UE can recover the packet PKT1 b (e.g., after the second retransmission) or a maximum number of retransmissions is reached.

Besides, the redundancy versions ReV0-ReV2 of the packet PKT2b are transmitted from the transmission point TP4 (by using the resource group 606), the transmission point TP1 (by using the resource group 601) and the transmission point TP3 (by using the resource group 605) to the UE in the initial transmission, the first retransmission and the second retransmission, respectively, since the UE is unable to recover the packet PKT2b before the second retransmission.

Therefore, according to the above illustration, transmissions (e.g., retransmissions) of redundancy versions of a packet are performed via different sets of transmission points, respectively. Diversity can be realized for the retransmissions such that the packet can be recovered in fewer retransmissions. As a result, throughput of the UE is improved. Besides, since multiple packets are transmitted to the UE in each of the transmissions, the throughput of the UE is further improved. Furthermore, since a packet including important information (e.g., control information) can be transmitted from multiple transmission points to the UE in the same transmission (e.g., retransmission), operation of the UE can be maintained regularly.

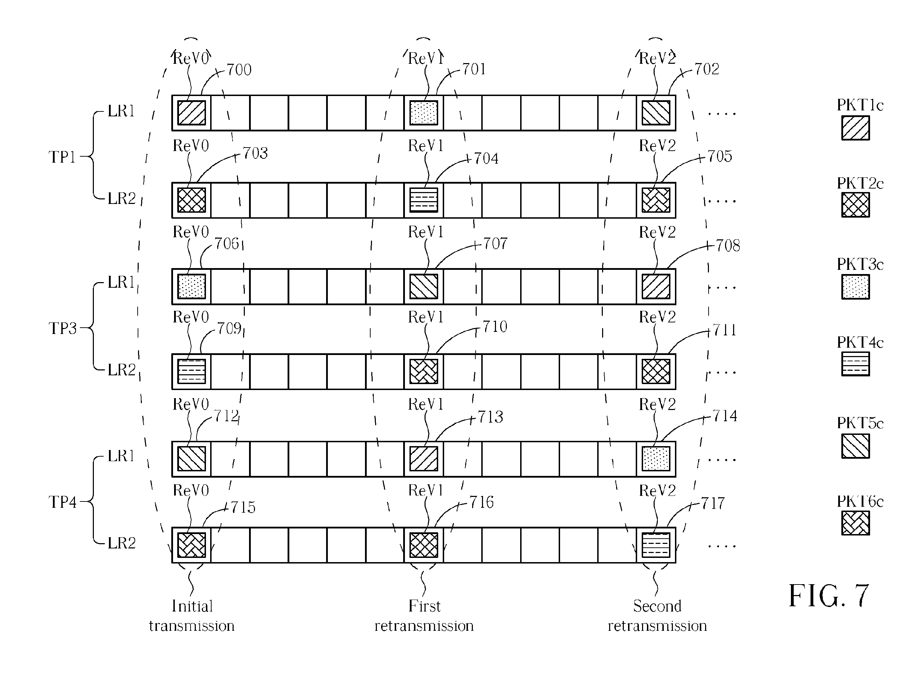

On the other hand, different redundancy versions of a packet can be transmitted from different transmission points with multiple layers to the UE, for recovering the packet. For example, please refer to Fig. 7, which is a schematic diagram of retransmissions of packets via different transmission points with multiple layers according to the present invention. In Fig. 7, resource groups allocated to a UE for performing initial transmissions or retransmissions of packets are represented by painted squares, and resource groups that are not used or allocated to other UEs are represented by blank squares.

In detail, the UE prepares to receive packets PKT1 c-PKT6c from the transmission points TP1, TP3 and TP4. Further, each of the transmission points TP1, TP3 and TP4 has two layers (i.e., at least two transmit antennas) LR1 and LR2, such that the packets PKT1 c-PKT6c can be transmitted by using more resource groups, i.e., resource groups 700-717. Preferably, a one-to-one correspondence is assumed for the resource groups according to frequency indices (i.e., subcarrier indices) of the resource groups. For example, the frequency indices of the resource groups 700, 703, 706, 709, 712 and 715 are the same, the frequency indices of the resource groups 701, 704, 707, 710, 713 and 716 are the same, and the frequency indices of the resource groups 702, 705, 708, 711, 714 and 717 are the same. Since the incremental redundancy is assumed for the HARQ in Fig. 7, there are multiple redundancy versions for each of the packets PKT1c-PKT6c. That is, when a retransmission is required for recovering a packet, a different redundancy version of the packet may be transmitted in the retransmission. A number of the redundancy versions of each of the packets PKT1 c-PKT6c is not required to be the same. In Fig. 7, the number of the redundancy versions of each of the packets PKT1 c-PKT6c is 3. The redundancy versions are labeled as ReV0-ReV2 according to the number of the redundancy versions.

Transmission of the packets PKT1 c and PKT2c is first described as follows. After the redundancy versions ReV0 of the packets PKT1 c and PKT2c are transmitted from the layer LR1 of the transmission point TP1 (by using the resource group 700) and the layer LR2 of the transmission point TP1 (by using the resource group 703) to the UE in an initial transmission, respectively, the UE is unable to recover the packets PKT1 c and PKT2c. The UE requests a first retransmission of the packets PKT1 c and PKT2c, e.g., by feeding back NACKs corresponding to the packets PKT1 c and PKT2c. Then, the redundancy versions ReV1 of the packets PKT1 c and PKT2c are transmitted from the layer LR1 of the transmission point TP4 (by using the resource group 713) and the layer LR2 of the transmission point TP4 (by using the resource group 716) to the UE in the first retransmission, respectively. That is, the first retransmission is performed via a transmission point different from the transmission point performing the initial transmission. If the UE is still unable to recover the packets PKT1 c and PKT2c after the first retransmission, the redundancy versions ReV2 of the packets PKT1 c and PKT2c are transmitted from the layer LR1 of the transmission point TP3 (by using the resource group 708) and the layer LR2 of the transmission point TP3 (by using the resource group 711) to the UE in a second retransmission, respectively. The above description is operated until the UE can recover the packets PKT1 c and PKT2c (e.g., after the second retransmission) or a maximum number of retransmissions is reached.

Similarly, the redundancy versions ReV0 of the packets PKT3c and PKT4c are transmitted from the layer LR1 of the transmission point TP3 (by using the resource group 706) and the layer LR2 of the transmission point TP3 (by using the resource group 709) to the UE in the initial transmission, respectively. The redundancy versions ReV1 of the packets PKT3c and PKT4c are transmitted from the layer LR1 of the transmission point TP1 (by using the resource group 701) and the layer LR2 of the transmission point TP1 (by using the resource group 704) to the UE in the first retransmission, respectively. Then, the redundancy versions ReV2 of the packets PKT3c and PKT4c are transmitted from the layer LR1 of the transmission point TP4 (by using the resource group 714) and the layer LR2 of the transmission point TP4 (by using the resource group 717) to the UE in the second retransmission, respectively, since the UE is unable to recover the packets PKT3c and PKT4c before the second retransmission.

Besides, the redundancy versions ReV0 of the packets PKT5c and PKT6c are transmitted from the layer LR1 of the transmission point TP4 (by using the resource group 712) and the layer LR2 of the transmission point TP4 (by using the resource group 715) to the UE in the initial transmission, respectively. The redundancy versions ReV1 of the packets PKT5c and PKT6c are transmitted from the layer LR1 of the transmission point TP3 (by using the resource group 707) and the layer LR2 of the transmission point TP3 (by using the resource group 710) to the UE in the first retransmission, respectively. Then, the redundancy versions ReV2 of the packets PKT5c and PKT6c are transmitted from the layer LR1 of the transmission point TP1 (by using the resource group 702) and the layer LR2 of the transmission point TP1 (by using the resource group 705) to the UE in the second retransmission, respectively, since the UE is unable to recover the packets PKT5c and PKT6c before the second retransmission.

Therefore, according to the above illustration, transmissions (e.g., retransmissions) of redundancy versions of a packet are performed via different transmission points, respectively. Diversity can be realized for the retransmissions such that the packet can be recovered in fewer retransmissions. As a result, throughput of the UE is improved. Besides, since a transmission point with multiple layers can provide more resource groups, more packets can be transmitted in a single transmission (e.g., retransmission). The throughput of the UE is further improved.

Please note that, different redundancy versions of a packet are transmitted via the same layer of different transmission points in Fig. 7. However, this is not a restriction required for realizing the present invention. For example, the redundancy versions ReV0 and ReV1 of the packet PKT1 c can be transmitted from the layer LR1 of the transmission points TP1 and the layer LR2 of the transmission points TP4 to the UE, respectively.

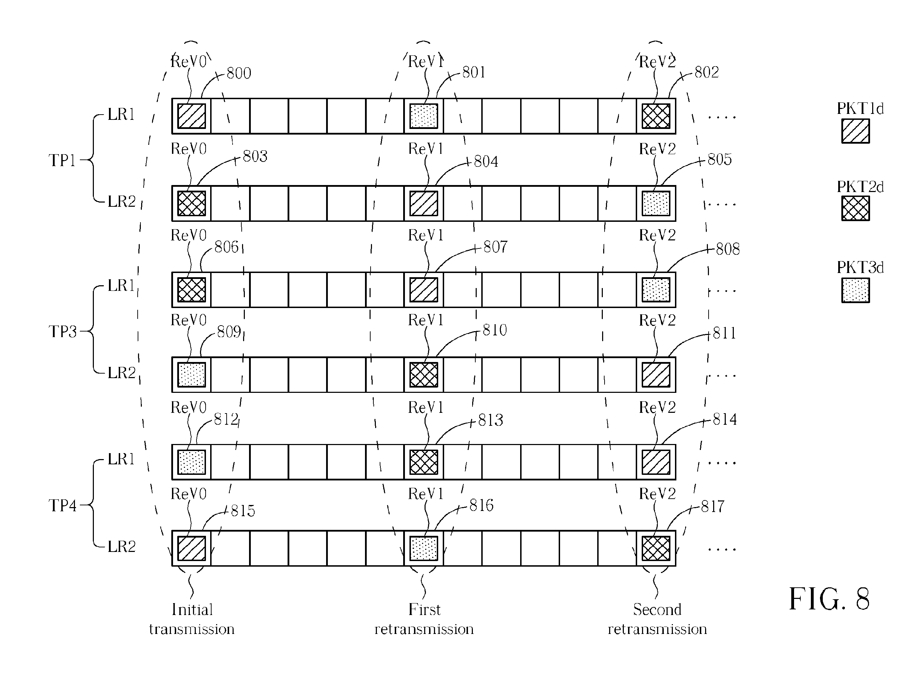

On the other hand, redundancy versions of a packet can be transmitted from multiple layers of different transmission points to the UE in a transmission (e.g., retransmission), for recovering the packet. For example, please refer to Fig. 8, which is a schematic diagram of retransmissions of packets via multiple layers of different transmission points according to the present invention. In Fig. 8, resource groups allocated to a UE for performing initial transmissions or retransmissions of packets are represented by painted squares, and resource groups that are not used or allocated to other UEs are represented by blank squares.

In detail, the UE prepares to receive packets PKT1d-PKT3d from the transmission points TP1, TP3 and TP4. Further, each of the transmission points TP1, TP3 and TP4 has two layers (i.e., at least two transmit antennas) LR1 and LR2, such that the packets PKT1d-PKT3d can be transmitted by using more resource groups, i.e., resource groups 800-817. Preferably, a one-to-one correspondence is assumed for the resource groups according to frequency indices (i.e., subcarrier indices) of the resource groups. For example, the frequency indices of the resource groups 800, 803, 806, 809, 812 and 815 are the same, the frequency indices of the resource groups 801, 804, 807, 810, 813 and 816 are the same, and the frequency indices of the resource groups 802, 805, 808, 811, 814 and 817 are the same. Since the incremental redundancy is assumed for the HARQ in Fig. 8, there are multiple redundancy versions for each of the packets PKT1d-PKT3d. That is, when a retransmission is required for recovering a packet, a different redundancy version of the packet may be transmitted in the retransmission. A number of the redundancy versions of each of the packets PKT1d-PKT3d is not required to be the same. In Fig. 8, the number of the redundancy versions of each of the packets PKT1d-PKT3d is 3. The redundancy versions are labeled as ReV0-ReV2 according to the number of the redundancy versions.

Transmission of the packet PKT1d is first described as follows. After the redundancy version ReV0 of the packet PKT1d is transmitted from the layer LR1 of the transmission point TP1 (by using the resource group 800) and the layer LR2 of the transmission point TP4 (by using the resource group 815) to the UE in an initial transmission, the UE is unable to recover the packet PKT1d. The UE requests a first retransmission of the packet PKT1d, e.g., by feeding back a NACK corresponding to the packet PKT1d. Then, the redundancy version ReV1 of the packet PKT1d is transmitted from the layer LR1 of the transmission point TP3 (by using the resource group 807) and the layer LR2 of the transmission point TP1 (by using the resource group 804) to the UE in the first retransmission. That is, the first retransmission is performed via layers of a set of transmission points, wherein the set of transmission points is different (i.e., partly different, but can be completely different) from the set of transmission points performing the initial transmission. If the UE is still unable to recover the packet PKT1d after the first retransmission, the redundancy version ReV2 of the packet PKT1d is transmitted from the layer LR1 of the transmission point TP4 (by using the resource group 814) and the layer LR2 of the transmission point TP3 (by using the resource group 811) to the UE in a second retransmission. The above description is operated until the UE can recover the packet PKT1 d (e.g., after the second retransmission) or a maximum number of retransmissions is reached.

Similarly, the redundancy version ReV0 of the packet PKT2d is transmitted from the layer LR1 of the transmission point TP3 (by using the resource group 806) and the layer LR2 of the transmission point TP1 (by using the resource group 803) to the UE in the initial transmission. The redundancy version ReV1 of the packet PKT2d is transmitted from the layer LR1 of the transmission point TP4 (by using the resource group 813) and the layer LR2 of the transmission point TP3 (by using the resource group 810) to the UE in the first retransmission. Then, the redundancy version ReV2 of the packet PKT2d is transmitted from the layer LR1 of the transmission point TP1 (by using the resource group 802) and the layer LR2 of the transmission point TP4 (by using the resource group 817) to the UE in the second retransmission, since the UE is unable to recover the packet PKT2d before the second retransmission.

Besides, the redundancy version ReV0 of the packet PKT3d is transmitted from the layer LR1 of the transmission point TP4 (by using the resource group 812) and the layer LR2 of the transmission point TP3 (by using the resource group 809) to the UE in the initial transmission, respectively. The redundancy version ReV1 of the packet PKT3d is transmitted from the layer LR1 of the transmission point TP1 (by using the resource group 801) and the layer LR2 of the transmission point TP4 (by using the resource group 816) to the UE in the first retransmission, respectively. Then, the redundancy version ReV2 of the packet PKT3d is transmitted from the layer LR1 of the transmission point TP3 (by using the resource group 808) and the layer LR2 of the transmission point TP1 (by using the resource group 805) to the UE in the second retransmission, respectively, since the UE is unable to recover the packet PKT3d before the second retransmission.

Therefore, according to the above illustration, transmissions (e.g., retransmissions) of redundancy versions of a packet are performed via different sets of transmission points and/or via different sets of layers. Diversity can be realized for the retransmissions such that the packet can be recovered in fewer retransmissions. As a result, throughput of the UE is improved. Besides, since a packet is transmitted from layers of a set of transmission points to the UE in the same transmission (e.g., retransmission), the throughput of the UE is further improved.

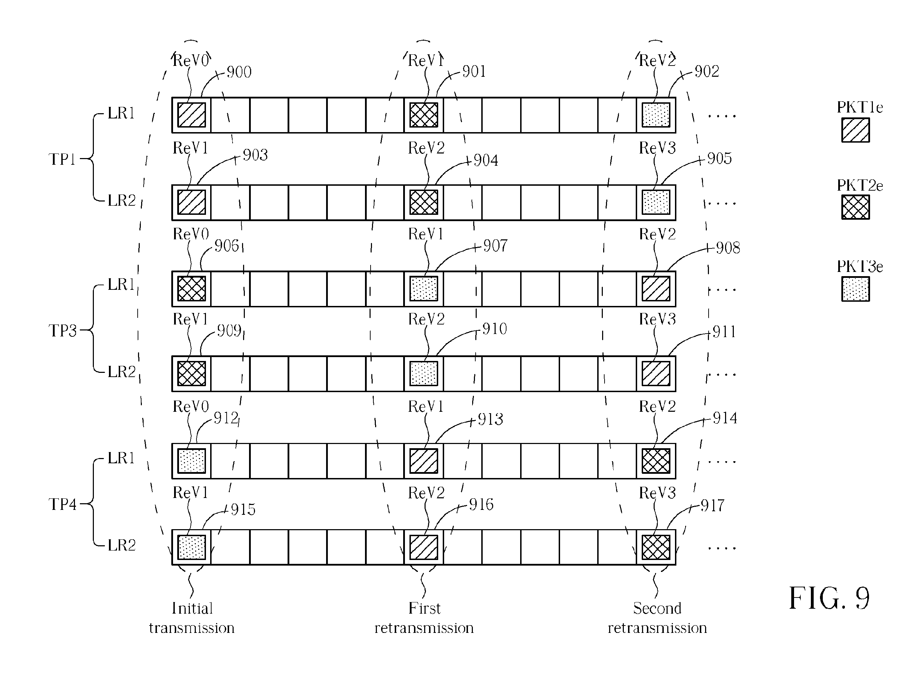

On the other hand, different redundancy versions of a packet can be transmitted from multiple layers of a transmission point to the UE for recovering the packet, and different transmission points are used for transmitting the packet in different transmissions, respectively. For example, please refer to Fig. 9, which is a schematic diagram of retransmissions of packets via multiple layers of different transmission points according to the present invention. In Fig. 9, resource groups allocated to a UE for performing initial transmissions or retransmissions of packets are represented by painted squares, and resource groups that are not used or allocated to other UEs are represented by blank squares.

In detail, the UE prepares to receive packets PKT1 e-PKT3e from the transmission points TP1, TP3 and TP4. Further, each of the transmission points TP1, TP3 and TP4 has two layers (i.e., at least two transmit antennas) LR1 and LR2, such that the packets PKT1 e-PKT3e can be transmitted by using more resource groups, i.e., resource groups 900-917. Preferably, a one-to-one correspondence is assumed for the resource groups according to frequency indices (i.e., subcarrier indices) of the resource groups. For example, the frequency indices of the resource groups 900, 903, 906, 909, 912 and 915 are the same, the frequency indices of the resource groups 901, 904, 907, 910, 913 and 916 are the same, and the frequency indices of the resource groups 902, 905, 908, 911, 914 and 917 are the same. Since the incremental redundancy is assumed for the HARQ in Fig. 9, there are multiple redundancy versions for each of the packets PKT1e-PKT3e. That is, when a retransmission is required for recovering a packet, a different redundancy version of the packet may be transmitted in the retransmission. A number of the redundancy versions of each of the packets PKT1 e-PKT3e is not required to be the same. In Fig. 9, the number of the redundancy versions of each of the packets PKT1 e-PKT3e is 4. The redundancy versions are labeled as ReV0-ReV3 according to the number of the redundancy versions.

Transmission of the packet PKT1 e is first described as follows. After the redundancy versions ReV0 and ReV1 of the packet PKT1e are transmitted from the layer LR1 of the transmission point TP1 (by using the resource group 900) and the layer LR2 of the transmission point TP1 (by using the resource group 903) to the UE in an initial transmission, respectively, the UE is unable to recover the packet PKT1e. The UE requests a first retransmission of the packet PKT1e, e.g., by feeding back a NACK corresponding to the packet PKT1 e. Then, the redundancy versions ReV1 and ReV2 of the packet PKT1 e are transmitted from the layer LR1 of the transmission point TP4 (by using the resource group 913) and the layer LR2 of the transmission point TP4 (by using the resource group 916) to the UE in the first retransmission, respectively. That is, the first retransmission is performed via layers of a transmission point different from the transmission point performing the initial transmission. If the UE is still unable to recover the packet PKT1 e after the first retransmission, the redundancy versions ReV2 and ReV3 of the packet PKT1 e are transmitted from the layer LR1 of the transmission point TP3 (by using the resource group 908) and the layer LR2 of the transmission point TP3 (by using the resource group 911) to the UE in a second retransmission, respectively. The above description is operated until the UE can recover the packet PKT1 e (e.g., after the second retransmission) or a maximum number of retransmissions is reached.

Similarly, the redundancy versions ReV0 and ReV1 of the packet PKT2e are transmitted from the layer LR1 of the transmission point TP3 (by using the resource group 906) and the layer LR2 of the transmission point TP3 (by using the resource group 909) to the UE in the initial transmission, respectively. The redundancy versions ReV1 and ReV2 of the packet PKT2e are transmitted from the layer LR1 of the transmission point TP1 (by using the resource group 901) and the layer LR2 of the transmission point TP1 (by using the resource group 904) to the UE in the first retransmission, respectively. Then, the redundancy version ReV2 and ReV3 of the packet PKT2e are transmitted from the layer LR1 of the transmission point TP4 (by using the resource group 914) and the layer LR2 of the transmission point TP4 (by using the resource group 917) to the UE in the second retransmission, respectively, since the UE is unable to recover the packet PKT2e before the second retransmission.

Besides, the redundancy versions ReV0 and ReV1 of the packet PKT3e are transmitted from the layer LR1 of the transmission point TP4 (by using the resource group 912) and the layer LR2 of the transmission point TP4 (by using the resource group 915) to the UE in the initial transmission, respectively. The redundancy versions ReV1 and ReV2 of the packet PKT3e are transmitted from the layer LR1 of the transmission point TP3 (by using the resource group 907) and the layer LR2 of the transmission point TP3 (by using the resource group 910) to the UE in the first retransmission, respectively. Then, the redundancy version ReV2 and ReV3 of the packet PKT3e are transmitted from the layer LR1 of the transmission point TP1 (by using the resource group 902) and the layer LR2 of the transmission point TP1 (by using the resource group 905) to the UE in the second retransmission, respectively, since the UE is unable to recover the packet PKT3e before the second retransmission.

Therefore, according to the above illustration, transmissions (e.g., retransmissions) of redundancy versions of a packet are performed via different transmission points, respectively. Diversity can be realized for the retransmissions such that the packet can be recovered in fewer retransmissions. As a result, throughput of the UE is improved. Besides, different redundancy versions of the packet are also transmitted from layers of a transmission point to the UE in the same transmission (e.g., retransmission), a number of transmissions of the packet is further reduced.

Please note that, the transmission points TP1, TP3 and TP4 used in the above examples are only for illustration purposes. In fact, a number of the transmission points involved in transmitting a packet to the UE is not limited to 3, and the transmission points involved in transmitting the packet to the UE may be determined (e.g., selected) according to a decision of the UE, a location of the UE, a decision of the serving point (i.e., transmission point TP1), coordination between the transmission points TP1-TP7, or may be determined randomly, and is not limited herein. Besides, the transmission points are not required to be determined (e.g., changed, selected) in each transmission (e.g., retransmissions). For example, the transmission points in transmitting the packet to the UE are changed only in selected retransmissions, and are not changed in the rest of the retransmissions.

Furthermore, a resource group used in the above figures can be seen as a concept of resource, and should not be limited to a specific amount of resources or a specific type of resource. For example, the resource group can include either a single resource block or a set of resource blocks, wherein the set of resource blocks may be composed of consecutive and/or nonconsecutive resource blocks. Besides, packets transmitted from respective transmission points to the UE in a transmission can be the same, partly different or completely different. That is, differences between the packets are not limited. For example, please refer back to Fig. 4, the packet PKT1 and the packet PKT2 can be the same packet. Alternatively, each of the packet PKT1 and the packet PKT2 includes 2 subblocks, wherein the first subblock of the packet PKT1 and the first subblock of the packet PKT2 are the same, and the second subblock of the packet PKT1 and the second subblock of the packet PKT2 are different. Alternatively, the packet PKT1 and the packet PKT2 can be completely different.

Those skilled in the art should readily make combinations, modifications and/or alterations on the abovementioned examples (e.g., Figs. 4-9) according to the present invention. The abovementioned steps of the processes, including the suggested steps, can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

To sum up, the present invention provides a method of performing retransmissions via different transmission points. According to the present invention, retransmissions of a packet are performed via different transmission points and/or via different layers. Diversity can be realized for the retransmissions such that the packet can be recovered in fewer retransmissions. As a result, throughput of the UE is improved. Besides, since a transmission point with multiple layers can provide more resource groups, more packets can be transmitted in a single transmission (e.g., retransmission). The throughput of the UE can be further improved.

## Claims

1. A method of performing a retransmission of a packet from a plurality of transmission points of a wireless communication system to a mobile device in the wireless communication system, **characterized by** the method comprising:
transmitting the packet from a first transmission point of the plurality of transmission points to the mobile device in a first transmission; and
transmitting the packet from a second transmission point of the plurality of transmission points to the mobile device in a second transmission, after transmitting the packet from the first transmission point in the first transmission, wherein the first transmission point and the second transmission point are different transmission points.

2. The method of claim 1, **characterized in that** the first transmission and the second transmission are retransmissions.

3. The method of claim 1, **characterized in that** the first transmission is an initial transmission.

4. The method of claim 1, further comprising:
transmitting the packet from a third transmission point of the plurality of transmission points to the mobile device in the first transmission; and
transmitting the packet from a fourth transmission point of the plurality of transmission points to the mobile device in the second transmission.

5. The method of claim 1, **characterized in that** a first redundancy version of the packet is transmitted from the first transmission point to the mobile device in the first transmission, and a second redundancy version of the packet is transmitted from the second transmission point to the mobile device in the second transmission.

6. The method of claim 5, further comprising:
transmitting a third redundancy version of the packet from a third transmission point of the plurality of transmission points to the mobile device in the first transmission.

7. The method of claim 5, **characterized in that** the first redundancy version of the packet is transmitted from a first layer of the first transmission point to the mobile device in the first transmission, and the second redundancy version of the packet is transmitted from a first layer of the second transmission point to the mobile device in the second transmission.

8. The method of claim 7, further comprising:
transmitting the first redundancy version of the packet from a layer of a third transmission point of the plurality of transmission points to the mobile device in the first transmission; and
transmitting the second redundancy version of the packet from a layer of a fourth transmission point of the plurality of transmission points to the mobile device in the second transmission.

9. The method of claim 7, further comprising:
transmitting the second redundancy version of the packet from a second layer of the first transmission point to the mobile device in the first transmission; and
transmitting a third redundancy version of the packet from a second layer of the second transmission point to the mobile device in the second transmission.

10. The method of claim 5, **characterized in that** the first redundancy version and the second redundancy version are the same redundancy version.

11. The method of claim 1, **characterized in that** the first transmission point and the second transmission point are determined according to a decision of the mobile device or a decision of a serving point of the plurality of transmission points, for transmitting the packet to the mobile device.

12. The method of claim 1, **characterized in that** the first transmission point and the second transmission point are determined according to coordination between the plurality of transmission points, for transmitting the packet to the mobile device.

13. The method of claim 1, **characterized in that** the first transmission point and the second transmission point are determined randomly, for transmitting the packet to the mobile device.

14. A plurality of transmission points of a wireless communication system for performing a retransmission of a packet to a mobile device of the wireless communication system, **characterized by** the plurality of transmission points comprising:
means for transmitting the packet from a first transmission point of the plurality of transmission points to the mobile device in a first transmission; and
means for transmitting the packet from a second transmission point of the plurality of transmission points to the mobile device in a second transmission, after transmitting the packet from the first transmission point in the first transmission, wherein the first transmission point and the second transmission point are different transmission points.

15. The transmission points of claim 14, **characterized in that** the first transmission and the second transmission are retransmissions.

16. The transmission points of claim 14, **characterized in that** the first transmission is an initial transmission.

17. The transmission points of claim 14, **characterized in that** further comprising:
means for transmitting the packet from a third transmission point of the plurality of transmission points to the mobile device in the first transmission; and
means for transmitting the packet from a fourth transmission point of the plurality of transmission points to the mobile device in the second transmission.

18. The transmission points of claim 14, **characterized in that** a first redundancy version of the packet is transmitted from the first transmission point to the mobile device in the first transmission, and a second redundancy version of the packet is transmitted from the second transmission point to the mobile device in the second transmission.

19. The transmission points of claim 18, further comprising:
means for transmitting a third redundancy version of the packet from a third transmission point of the plurality of transmission points to the mobile device in the first transmission.

20. The transmission points of claim 18, **characterized in that** the first redundancy version of the packet is transmitted from a first layer of the first transmission point to the mobile device in the first transmission, and the second redundancy version of the packet is transmitted from a first layer of the second transmission point to the mobile device in the second transmission.

21. The transmission points of claim 20, further comprising:
means for transmitting the first redundancy version of the packet from a layer of a third transmission point of the plurality of transmission points to the mobile device in the first transmission; and
means for transmitting the second redundancy version of the packet from a layer of a fourth transmission point of the plurality of transmission points to the mobile device in the second transmission.

22. The transmission points of claim 20, further comprising:
means for transmitting the second redundancy version of the packet from a second layer of the first transmission point to the mobile device in the first transmission; and
means for transmitting a third redundancy version of the packet from a second layer of the second transmission point to the mobile device in the second transmission.

23. The transmission points of claim 18, **characterized in that** the first redundancy version and the second redundancy version are the same redundancy version.

24. The transmission points of claim 14, **characterized in that** the first transmission point and the second transmission point are determined according to a decision of the mobile device or a decision of a serving point of the plurality of transmission points, for transmitting the packet to the mobile device.

25. The transmission points of claim 14, **characterized in that** the first transmission point and the second transmission point are determined according to coordination between the plurality of transmission points, for transmitting the packet to the mobile device.

26. The transmission points of claim 14, **characterized in that** the first transmission point and the second transmission point are determined randomly, for transmitting the packet to the mobile device.
